(19) Europäisches Patentamt
European Patent Office
Office européen des brevets

(11) Publication number: 0 052 694 B1

(12) EUROPEAN PATENT SPECIFICATION

(45) Date of publication of patent specification: 29.05.85

(51) Int. Cl.$^4$: C 08 G 77/60, C 01 B 31/36 // D01F9/10, C04B35/00, C04B35/56

(21) Application number: 81105634.0

(22) Date of filing: 17.07.81

(54) **Branched polycarbosilanes and their use in the production of silicon carbide.**

(30) Priority: 21.11.80 US 209151

(43) Date of publication of application: 02.06.82 Bulletin 82/22

(45) Publication of the grant of the patent: 29.05.85 Bulletin 85/22

(84) Designated Contracting States: AT BE DE FR GB IT NL SE

(56) References cited:
US-A-4 134 759

AMERICAN CERAMIC SOCIETY BULLETIN, Vol. 60, No. 3, March 1981, Columbus, Ohio, USA, M. IWASA et al. "Fracture of Single Crystal A12 O3"
Chemical Abstracts, vol. 61, no. 7, September 1964, Columbus, Ohio, USA, abstract no. 8436a
Chemical Abstracts, col. 91, no. 16, 15 October 1979, Columbus, Ohio, USA

(73) Proprietor: UNION CARBIDE CORPORATION
Old Ridgebury Road
Danbury Connecticut 06817 (US)

(72) Inventor: Schilling, Curtis Louis, Jr.
33 Sunset Dr.
Croton-on-Hudson N.Y. 10520 (US)
Inventor: Williams, Thomas Charles
16 Rolling Hill Rd.
Ridgefield Connecticut 06877 (US)
Inventor: Wesson, John Peter
28 Scenic Circle
Croton-on-Hudson N.Y. 10520 (US)

(74) Representative: Wuesthoff, Franz, Dr.-Ing. et al
Patentanwälte Wuesthoff -v. Pechmann-Behrens-Goetz Schweigerstrasse 2
D-8000 München 90 (DE)

EP 0 052 694 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the invention

This application relates to branched polycarbosilane compositions, to their production from selected monomer systems, and to their use in the production of silicon carbide.

Description of the prior art

Silicon carbide has long been known and appreciated for its chemical inertness, high temperature stability, semiconductor properties, and especially its extreme hardness. The hardness of silicon carbide approaches that of diamond and boron nitride.

Silicon carbide was originally prepared by reacting inorganic materials, for example silica and a carbon source such as coke or graphite, at extremely high temperatures. More recently, various methods for preparing silicon carbide from organic materials such as silanes and other organic silicon derivatives have been discovered.

One widely reported approach is described in the following references: U.S. Patents Nos. 4,052,430, 4,100,233, 4,105,455, 4,110,386, 4,117,057, 4,122,139, 4,134,759, 4,147,538, 4,159,259, Japanese Patent Disclosure No. 1979—65,799, Nakamura *et al., Chemical Abstracts,* 91:215596p, and Yajima *et al., Chemistry Letters, 5,* 435—6 (1976). That approach provides polycarbosilanes, some of which are soluble and thermoformable by standard methods, which can be pyrolized to silicon carbide. These polycarbosilanes are prepared by a pre-pyrolysis/rearrangement/polymerization of cyclic or linear polydimethylsilanes, which in turn are typically prepared from $(CH_3)_2SiCl_2$ and active metals.

More specifically, such prior art requires an active metal condensation of $Me_2SiCl_2$ to polydimethylsilanes (cyclic or linear), which are isolated and converted by application of heat (and pressure in the case of cyclics) to polycarbosilanes in a separate step, as illustrated by the equations:

$$Me_2SiCl_2 \xrightarrow[\text{xylene}]{\text{Na}} (SiMe_2)_x + NaCl$$

$$(SiMe_2)_x \xrightarrow{\Delta} \underset{\text{Polycarbosilane}}{(CH_2SiHMe)_x}$$

The crude polycarbosilanes so produced are often subjected to further treatments such as vacuum distillation and fractionation by precipitation from a non-solvent to isolate polycarbosilanes of particular use in making silicon carbide fibers.

Such prior art contains some disclosures relating to starting materials other than $(CH_3)_2SiCl_2$. For instance, Japanese Patent Disclosure No. 1979—65/799, contains an Example 11 in which $(CH_3)_2SiCl_2$ and $CH_2{=}CH(CH_3)SiCl_2$ are reacted under conditions similar to those contemplated herein. However, since they are reacted in a molar ratio of more than 19:1, no appreciable amount of silicon carbide is obtainable from the reaction product; see Example F hereinbelow.

Summary of the invention

It has now been found that novel branched polycarbosilanes which can be pyrolized to silicon carbide can be prepared in one step from simple silane monomers containing vinyl or halomethyl moieties. More particularly, this invention consists in a process for the production of silicon carbide which comprises, first, reacting at least one compound of the formula

$$(CH_2{=}CH)_aR_bSiX_c(CH_2X)_d$$

wherein R is lower alkyl with up to 8 carbon atoms, X is halo, a is 0 or 1, b is 0—3, c is 0—4, d is 0—4, a+b+c+d totals 4, and a+d totals at least 1, said compound or mixture of compounds being selected so that the average molar functionality (as described hereinbelow) of the compound system to be reacted is at least 2.3, with an active metal in an inert solvent at an elevated temperature to form a branched polycarbosilane composition, and, subsequently, pyrolizing the branched polycarbosilane composition in an inert atmosphere to form silicon carbide.

Description of the preferred embodiments

In a broad aspect, this invention contemplates a process for the production of branched polycarbosilane compositions which comprises reacting, with an active metal in an inert solvent at an elevated temperature, a compound system comprising one or more monomers of formula (I)

$$(CH_2{=}CH)_aR_bSiX_c(CH_2X)_d \quad (I)$$

wherein R is lower alkyl having up to eight carbon atoms (preferably methyl), X is halo (preferably chloro), a is 0 or 1, b is 0—3, c is 0—4, d is 0—4, a+b+c+d totals 4, and a+d totals at least 1, such compound system

being selected such that its average molar functionality is at least 2.3 and the formation of silicon-carbon bonds is favored. The monomer compound system of the present preferably contains at least 2 different monomers of formula (I), at least 1 of which is characterized by an a+c+d total of 3 or 4, in order to permit selection of monomer ratios such that the average molar functionality of the system is at least 2.3. Such branched polycarbosilanes may be described as compositions which comprise more than one unit of the formula

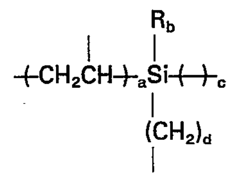

wherein R is lower alkyl having up to 8 carbon atoms (preferably methyl), a is 0 or 1, b is 0—3, c is 0—4, d is 0—4, and a+b+c+d totals 4, with the three essential provisos that, in each of the different units, a, b, c, d, and R may differ (depending on the monomer from which they originate), in at least 1 unit, a+d must total at least 1 (in order to provide Si—C bonds), and, in at least 1 unit (which may but need not be the unit in which a+d totals at least 1), a+c+d totals at least 3.

A further aspect of the invention consists in pyrolyzing, by means in themselves known to those skilled in the art, the branched polycarbosilane compositions of the present invention in order to produce silicon carbide and products containing silicon carbide.

The following formulas (wherein R and X have the meanings indicated above) illustrate classes of compounds which can be utilized in the formation of the branched polycarbosilanes of the present invention:

| | |
|---|---|
| $CH_2{=}CHSiX_2(CH_2X)$ | $CH_2{=}CHSiX_3$ |
| $CH_2{=}CHR_2Si(CH_2X)$ | $R_3Si(CH_2X)$ |
| $CH_2{=}CHRSiX(CH_2X)$ | $R_2Si(CH_2X)_2$ |
| $SiX_4$ | $RSi(CH_2X)_3$ |
| $R_3SiX$ | $RSiX(CH_2X)_2$ |
| $CH_2{=}CHR_3Si$ | $RSiX_2(CH_2X)$ |
| $SiX(CH_2X)_3$ | $CH_2{=}CHRSiX_2$ |
| $SiX_2(CH_2X)_2$ | $CH_2{=}CHR_2SiX$ |
| $R_2SiX(CH_2X)$ | $RSiX_3$ |
| $R_2SiX_2$ | $SiX_3(CH_2X)$ |

As indicated, it is preferred to use a mixture (*i.e.* 2 or more monomer compounds selected from different classes) to make the branched polycarbosilanes. Such mixtures include:

$CH_2{=}CHRSiX_2/R_2SiX(CH_2X)$

$CH_2{=}CHRSiX_2/R_2SiX$

$R_2SiX(CH_2X)/RSiX_3$

$CH_2{=}CHRSiX_2/CH_2{=}CHR_2SiX/R_3SiX$

$CH_2{=}CHRSiX_2/R_2SiX(CH_2X)/R_3SiX$

$CH_2{=}CHRSiX_2/R_2SiX_2/R_3SiX$

Functionality

A key feature of the present invention is the concept of the average molar functionality, F, of the compound system (*i.e.* single compound or mixture of compounds) from which the branched

polycarbosilanes of the invention are made. Specific compounds useful according to the present invention can be assigned specific functionality values, f, as indicated below (Me=methyl):

| Monomer | Formula | f* |
|---|---|---|
| Trimethylchlorosilane | $Me_3SiCl$ | 1 |
| Dimethyldichlorosilane | $Me_2SiCl_2$ | 2 |
| Methyltrichlorosilane | $MeSiCl_3$ | 3 |
| Tetrachlorosilane | $SiCl_4$ | 4 |
| Chloromethyltrimethylsilane | $Me_3SiCH_2Cl$ | 1 |
| Bis(chloromethyl)dimethylsilane | $Me_2Si(CH_2Cl)_2$ | 2 |
| Tris(chloromethyl)methylsilane | $MeSi(CH_2Cl)_3$ | 3 |
| Tetrakis(chloromethyl)silane[+] | $Si(CH_2Cl)_4$ | 4 |
| Chloromethyldimethylchlorosilane | $ClCH_2SiMe_2Cl$ | 2 |
| Bis(chloromethyl)methylchlorosilane | $(ClCH_2)_2SiMeCl$ | 3 |
| Tris(chloromethyl)chlorosilane | $(ClCH_2)_3SiCl$ | 4 |
| Chloromethylmethyldichlorosilane | $ClCH_2SiMeCl_2$ | 3 |
| Bis(chloromethyl)dichlorosilane | $(ClCH_2)_2SiCl_2$ | 4 |
| Chloromethyltrichlorosilane | $ClCH_2SiCl_3$ | 4 |
| Vinyltrichlorosilane | $CH_2{=}CHSiCl_3$ | 5 |
| Vinylmethyldichlorosilane | $CH_2{=}CHSiMeCl_2$ | 4 |
| Vinyldimethylchlorosilane | $CH_2{=}CHSiMe_2Cl$ | 3 |
| Vinyltrimethylsilane | $CH_2{=}CHSiMe_3$ | 2 |
| Vinyldimethylchloromethylsilane | $CH_2{=}CHSiMe_2CH_2Cl$ | 3 |
| Bis(chloromethyl)vinylmethylsilane[+] | $CH_2{=}CHSiMe(CH_2Cl)_2$ | 4 |
| Vinyltris(chloromethyl)silane[+] | $CH_2{=}CHSi(CH_2Cl)_3$ | 5 |
| Bis(chloromethyl)vinylchlorosilane[+] | $CH_2{=}CHSiCl(CH_2Cl)_2$ | 5 |
| Chloromethylvinyldichlorosilane | $CH_2{=}CHSiCl_2CH_2Cl$ | 5 |
| Chloromethylvinylmethylchlorosilane | $CH_2{=}CHSiMeClCH_2Cl$ | 4 |

*Note that vinylic silanes can add additional units of functionality in higher temperature reactions (see discussion *infra*).

[+]These compounds are conceptually useful in the present invention; however, they have not been reported in the prior act.

These f values represent the number of bonds with each monomer can form with other molecules, including formation of both

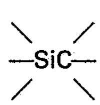 and 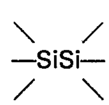

bonds, and can be used to calculate average molar functionality values, F, for polycarbosilanes prepared from known mixtures of silane monomers. The chemistry of bond formation is straightforward, involving active metal dechlorination (1) or disilylation (2) of the vinyl groups.

(1) 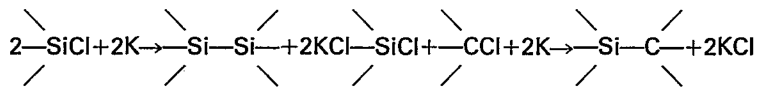

(2) 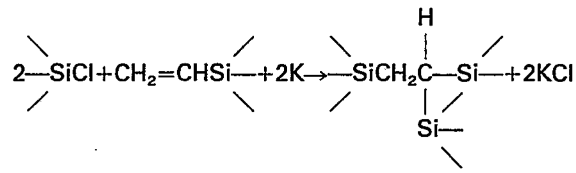

When the vinylic organosilane contains no silicon-bonded chlorine, reactions are observed at the vinyl group. Dunogues *et al., Compt. Rend., 278C*, 467—70 (1974), have shown that at high temperatures the vinyl group can be polyfunctional

$$(3)\quad Me_3SiCl+CH_2{=}CHSiMe_3 \xrightarrow[\substack{100°C\\ FeCl_3}]{Mg} Me_3SiCH{=}CHSiMe_3$$

$$(4)\quad 2Me_3SiCl+CH_2{=}CHSiMe_3 \xrightarrow[\substack{80°C\\ TiCl_4}]{Mg} Me_3SiCH_2CH(SiMe_3)_2$$

$$(5)\quad 3Me_3SiCl+CH_2{=}CHSiMe_3 \xrightarrow[\substack{100°C\\ FeCl_3}]{Mg} (Me_3Si)_2CHCH(SiMe_3)_2$$

The molar functionality, F, of a polycarbosilane is identical to that of the compound system from which it is prepared. For a polycarbosilane prepared from a single monomer, F is equal to f. For a polycarbosilane prepared from a mixture, the molar functionality F is dependent upon the molar ratios of the monomers as well as their f values. For example, F for a polycarbosilane prepared from a mixture of monomers having respective funcionality values $f_1$, $f_2$, and $f_3$, in the molar ratio x/y/z, can be calculated from the equation:

$$F=\frac{xf_1+yf_2+zf_3}{(x+y+z)}$$

Preferred molar functionality values for tractable solid polycarbosilanes are greater than two (F>2) requiring that at least one of the monomers has an f value of 3 or higher, *i.e.,* that the polycarbosilane is branched, rather than linear.

The property which the polycarbosilanes of the present invention possess, namely their ability to be converted into silicon carbide compositions by ambient pressure pyrolysis, is believed to be due to their branched structures. The degree of branching and the molecular weight can be controlled, by appropriate choices of starting monomer systems and the molar ratios within such monomer systems, such that the products range from soluble oils to the preferred soluble solids to insoluble, infusable solids. While the branching structures of certain of the polycarbosilanes of the present invention derive from the inherent functionalities of the monomers used, the branched of other polycarbosilanes derives from heretofore unrecognized abilities of vinylalkylhalosilanes to react at both vinyl and halosilyl groups and thus provide unexpectedly high functionalities.

Processing

In the present invention, a monomer system is reacted with an active metal in an inert solvent at an elevated temperature to generate branched polycarbosilanes.

The preferred active metal is potassium for reasons of high reactivity and low melting point. Lithium, sodium, and magnesium are less reactive; they may be used if longer reaction times are acceptable. Alloys such as potassium/sodium may also be used.

The preferred solvent is anhydrous tetrahydrofuran. However, higher boiling solvents such as dioxane and 1,2-dimethoxyethane, or hydrocarbons such as toluene, xylene, or octane can be used, particularly

with the less reactive metals. Hexamethylphosphoramide may also be used, but it is more costly and is a suspected carcinogen.

The combination of potassium as the active metal and tetrahydrofuran as the solvent allows reactions to occur at the reflux temperature of tetrahydrofuran, which is just above the melting point of potassium. This combination does not allow significant reaction of chlorosilyl groups with the tetrahydrofuran solvent; such reactions have been observed with sodium and magnesium.

The polycarbosilane-forming reactions of the present invention can be run in standard laboratory glassware or commercial equipment, under inert atmospheres at atmospheric pressures, with provisions for external heating and cooling, stirring, and for incremental addition of mixtures of monomers. Thus, the process of the present invention regarding polycarbosilane preparation is not narrowly critical with regard to equipment and requires no extraordinary equipment.

In a typical preparation, a weighed amount of potassium metal is placed in anhydrous tetrahydrofuran under an inert atmosphere. Heat is applied to reflux, melting the potassium, and addition of the monomer system is begun, with stirring. The reactions are sufficiently exothermic at controlled addition rates to maintain reflux without application of external heat. After completion of addition, heat may be reapplied for any specified time period. Illustrative examples are supplied below.

Reaction conditions are thus not narrowly critical except that reaction temperature should be maintained above the melting point of the active metal and stirring should be maintained to prevent caking of by-product salts. A slight excess of the active metal is desired to ensure consumption of a majority of chlorosilyl groups. Reactions can be terminated by addition of an alkylating agent, such as methyl chloride, or a protic material, such as water. Salt by-products are removed by filtration, and the mother liquor concentrated by stripping. The resultant polycarbosilane solution can be added to a non-solvent medium such as methanol/acetone, precipitating the tractable solid polycarbosilane fraction, which is collected and dried. The non-solvent mixture can be stripped to recover a liquid polycarbosilane residue, while the filtered salt can be water-washed to isolate insoluble polycarbosilanes, if any. These reaction procedures are familiar to those skilled in the art and are typical of numerous active metal reactions.

Silicon carbide

The branched polycarbosilanes of the present invention, ranging from soluble oils to insoluble solids, can be converted to silicon carbide compositions by themselves or in mixture with other components as disclosed for prior art polycarbosilanes, simply by heating in an inert atmosphere over specified time periods up to 1200°C or beyond.

Most useful of the branched polycarbosilanes of the present invention are those which are, at room temperature, normally solid and soluble in non-protic organic solvents. They can be thermo-formed into a variety of shapes such as pellets, fibers, and films or can be dissolved in a variety of solvents including carbon tetrachloride, methylene dichloride, trichloromethane, toluene, tetrahydrofuran, and dioxane, to be cast from solution as films or spun from solution as fibers.

The range of polycarbosilanes can be used as binders for the shaping of infusible, insoluble powders such as silicon carbide or silicon nitride in the same fashion as prior art polycarbosilanes. Both shaped polycarbosilane articles and shaped polycarbosilane-bound articles can be converted to silicon carbide compositions by atmospheric pressure pyrolysis.

The shaping, spinning, and casting of the polycarbosilanes of the present invention can be performed in commercially available equipment designed for such purposes and known to those skilled in the art. Similarly, the pyrolyses are also performed in commercially available equipment designed for such work and also known to those skilled in the art. Sintering aids typical of such high temperature reactions may be employed if desired.

Examples

The following examples serve to demonstrate the improved processes and new compositions of the present invention. Examples A—F are not within the scope of the present claims. Examples 1—14 are illustrative regarding the invention.

All reactions were run in standard laboratory glassware of various sizes using heating mantles, mechanical stirrers with glass blades, thermometers, wet ice condensers, and provisions for maintenance of argon atmospheres. Reported yields are based on theoretical yields calculated from the silane mixture charged, Me=Methyl and THF=Tetrahydrofuran.

Example A: F=2.0

Reaction of 2/1 $Me_3SiCl/CH_2=CHSiMeCl_2$ with K in THF

In a 500 ml three-necked round bottom flask with standard taper fittings were combined 16.8 g (0.43 mol) of K metal chunks and 131.4 g anhydrous THF. The flask was fitted with heating mantle, mechanical stirrer with glass blade, thermometer, additional funnel, and wet ice condenser plus valves for maintaining an Ar atmosphere. Flask contents were heated to reflux (66°C) melting the K and addition of a mixture of 23.3 g (0.215 mol) of $Me_3SiCl$ and 15.2 g (0.107 mol) of $CH_2=CHSiMeCl_2$ was begun. Addition was completed in 50 min, maintaining the reaction temperature at 66—67.5°C with no external heating. Heat was applied to maintain reflux for an additional 75 min. Reaction was terminated by dropwise addition of a

solution of 5 g $H_2O$ in 15 ml THF. White solid precipitate was collected by suction filtration, rinsed with several small portions of THF, and dissolved in water. A clear solution was obtained with no insoluble polycarbosilane. The THF solution was vacuum stripped and distilled up to 25°C/0,0665 mbar head temperature. There was obtained 16.7 g (71.9%) of non-distilled residue, a soluble polycarbosilane fluid (molar functionality F=2.0). The relatively high proportion of the $Me_3SiCl$ endblocker (2:1) reduced the molecular weight, preventing formation of soluble solid which characterizes the branched polycarbosilanes of the present invention.

Similar reactions using octane or toluene in place of THF gave respective yields of 46.4% or 42.4% of soluble polycarbosilane fluid. The reaction in toluene also yielded $CH_2SiMe_3$ as a volatile product.

Example B: F=2.0
Reaction of 1/1 $Me_3SiCl/CH_2{=}CHSiMe_2Cl$ with K in THF

In the apparatus of Example A were combined 18.6 g (0.48 mol) K metal and 136.0 g anhydrous THF. The system was heated to reflux, which was maintained over 50 min by the addition of a mixture of 26.0 g (0.24 mol) of $Me_3SiCl$ and 28.9 g (0.24 mol) of $CH_2{=}CHSiMe_2Cl$. Heat was applied to maintain reflux for another hr. Workup as in Example A left 16.0 g of polycarbosilane fluid (47.2%) which did not distil below 51°C/0,066 mbar (molar functionality F=2.0).

Example C: F=1.33
Reaction of 2/1 $Me_3SiCl/CH_2{=}CHSiMe_3$ with K in THF

Reaction procedure of Examples A and B was followed with 17.3 g (0.44 mol) of K metal, 137.3 g anhydrous THF, and a mixture of 47.0 g (0.44 mol) of $Me_3SiCl$ and 44.0 g (0.44 mol) of $CH_2{=}CHSiMe_3$. Workup yielded 33.8 g $Me_3SiCH_2CH(SiMe_3)_2$, b.p. 38°C/0,09 mbar (62.4%), confirming that disilylation is the major reaction of vinyl groups in these polycarbosilane-forming reactions.

Example D: F=2.0
Reaction of 1/1 $Me_2SiCl_2/CH_2{=}CHSiMe_3$ with K in THF

The procedure of Example A was repeated using 33.6 g (0.88 mol) of K metal, 187.7 g anhydrous THF and a mixture of 52.9 g (0.41 mol) of $Me_2SiCl_2$ and 41.0 g (0.41 mol) of $CH_2{=}CHSiMe_3$. Workup yielded 39.7 g (57.6%) of linear polycarbosilane fluid, b.p. greater than 99°C/0,05 mbar, having the average structure $\text{-}[CH_2CH(SiMe_3)SiMe_2]_x\text{-}$. Pyrolysis of this fluid to only 590°C under an inert atmosphere at atmospheric pressure left less than 0.3% residue. This example confirms that the linear polycarbosilane disclosed by Nefedov *et al., Proc. Acad. Sci., USSR, 154,* 76—8, (1964), is not an effective precursor for silicon carbide when pyrolyzed at atmospheric pressure under an inert atmosphere.

Example E: F=2.0
Reaction of $ClCH_2SiMe_2Cl$ with K in THF

The procedure of Example A was repeated using 16.7 g (0.42 mol) of K metal, 30.0 g (0.21 mol) of $ClCH_2SiMe_2Cl$, and 194.5 g anhydrous THF. Workup yielded 10.6 g (79.2%) of polysilmethylene fluid, b.p. greater than 70°/0,133 mbar. Pyrolysis to only 585°C left less than 1% residue confirming that linear polycarbosilanes such as polysilmethylenes known from U.S. Patent No. 2,483,972 and U.S. Patent No. 2,850,514, are not effective precursors for silicon carbide when pyrolyzed at atmospheric pressure under an inert atmosphere.

Example F: F=2.1
Reaction of 19.25/1 $Me_2SiCl_2/CH_2{=}CHSiMeCl_2$ with K in THF

The procedure of Example A was repeated using 33.3 g (0.85 mol) of K metal, 248 g anhydrous THF and a mixture of 49.7 g (0.385 mol) of $Me_2SiCl_2$ and 2.8 g (0.02 mol) of $CH_2{=}CHSiMeCl_2$. Additional THF (45 ml) was added after the exothermic addition was completed to reduce viscosity. Workup yielded 11.5 g of solid which was insoluble in THF (48.5%) and 12.0 g (50.6%) of solid which was soluble in THF. The THF-soluble solid was shown to be mainly cyclic hexamer, $(Me_2Si)_6$, by gas chromatography. The THF-insoluble solid was pyrolyzed at atmospheric pressure to only 675°C, leaving only 2.6% residue, confirming that the reaction product of 19.25/1 $Me_2SiCl_2/CH_2{=}CHSiMeCl_2$ as disclosed in Example 11, Japanese 1979—65,799, is not an effective precursor for silicon carbide. Example 11 in fact discloses that simply distillation at 0,53 mbar at 195°C leaves only 15% residue, and 195°C is well below temperatures needed for conversion to silicon carbide.

Example 1: F=2.4
Reaction of 2/3 $MeSiCl_3/ClCH_2SiMe_2Cl$ with K in THF

The procedures of Example E were repeated using 32.3 g (0.83 mol) of K metal, 326 g anhydrous THF, and a mixture of 19.6 g (0.13 mol) of $MeSiCl_3$ and 28.1 g (0.2 mol) of $ClCH_2SiMe_2Cl$. Workup yielded 7.8 g (39%) of soluble solid polycarbosilane. The solid was converted to an SIC composition by Pyrolysis in Ar to 1200°C at atmospheric pressure. The presence of β-SiC was confirmed by X-ray diffraction. This example, with branching introduced by units derived from $MeSiCl_3$, confirms that branched structures are needed for conversion to SiC when results are compared to those of Example E.

Example 2: F=2.57
Reaction of 3/1.2 $ClCH_2SiMe_2Cl/CH_2{=}CHSiMeCl_2$ with K in THF

The procedure of Example E was used with 50.0 g (1.28 mol) of K metal, 800 g of anhydrous THF, and a mixture of 57.9 g (0.405 mol) of $ClCH_2SiMe_2Cl$ and 22.8 g (0.162 mol) of $CH_2{=}CHSiMeCl_2$. Workup yielded 17.7 g (43.7%) of soluble polycarbosilane fluid and 20.2 g (49.9%) of soft soluble solid polycarbosilane. The molar functionality F was 2.57. The solid was pyrolyzed to an SiC composition under Ar atmosphere at atmospheric pressure. This example demonstrates that polysilmethylenes which are branched due to incorporation of $CH_2{=}CHSiMeCl_2$-derived units to yield SiC on pyrolysis while linear polysilmethylenes (Example E) do not.

Example 3: F=2.4
Reaction of 2/3 $MeSiCl_3/CH_2{=}CHSiMe_3$ with K in THF

The procedures of Example D were followed using 18.2 g (0.46 mol) of K metal, 180 g of anhydrous THF, and a mixture of 22.4 g (0.15 mol) of $MeSiCl_3$ and 23.0 g (0.23 mol) of $CH_2{=}CHSiMe_3$. Workup yielded 6.0 g (20%) of soluble solid polycarbosilane and 0.8 g (2.3%) of insoluble solid polycarbosilane. The molar functionality F was 2.4. The soluble solid was converted to an SiC composition by pyrolysis to 1200°C under Ar atmosphere at atmospheric pressure. X-ray diffraction confirmed conversion to β-SiC. This example confirms that the branching introduced by $MeSiCl_3$ is needed for conversion to SiC when compared to the linear polycarbosilane of Example D.

Example 4: F=2.67
Reaction of 0.8/1 $Me_3SiCl/CH_2{=}CHSiMeCl_2$ with K in THF

The procedure of Example A was repeated using a 1000 ml flask, 72.4 g (1.85 mol) K metal, 508.8 g anhydrous THF, and a mixture of 56.4 g (0.52 mol) of $Me_3SiCl$ and 94.5 g (0.67 mol) of $CH_2{=}CHSiMeCl_2$. Similar workup yielded a yellow fluid which was added to 550 ml acetone, precipitating a white solid. The solid dissolved in a equal volume of $CCl_4$ and reprecipitated from 900 ml acetone, followed by filtration and vacuum drying. The organic phases were stripped and distilled to 69°C/0,11 mbar leaving a polycarbosilane fluid, while addition of the reaction salt precipitate to $H_2O$ left insoluble polycarbosilane which was collected and vacuum dried. The yields were: soluble fluid, 37.1 g (43.7%), soluble solid, 21.4 g (25.2%), and insoluble solid, 14.0 g (16.5%). The molar functionality F was 2.67. The soluble and insoluble solids were converted to SiC compositions by heating to 1200°C in an inert atmosphere at atmospheric pressure. β-SiC formation was confirmed by X-ray diffraction.

Example 5: F=2.54
Reaction of 0.6/1/1 $Me_3SiCl/Me_2SiCl_2/CH_2{=}CHSiMeCl_2$ with K in THF

The procedure of Example 4 was followed using a 500 ml flask with 35.0 g (0.9 mol) K metal, 166.0 g anhydrous THF, and a mixture of 12.6 g (0.12 mol) of $Me_3SiCl$, 25.3 g (0.2 mol) of $Me_2SiCl_2$, and 27.6 g (0.2 mol) of $CH_2{=}CHSiMeCl_2$. Workup yielded 38.1% (12.6 g) of polycarbosilane fluid (b.p. greater than 65°/0,08 mbar and 17.3 g (52.1%) of soluble solid polycarbosilane with no insoluble solid polycarbosilane. The molar functionality F was 2.54. The soluble solid was converted to an SiC composition by pyrolysis up to 1200°C under Ar at atmospheric pressure, with β-SiC formation confirmed by X-ray diffraction. The polycarbosilane fluid was also converted to an SiC composition with a lower relative yield.

Example 6: F=2.60
Reaction of 0.5/1/1 $Me_3SiCl/Me_2SiCl_2/CH_2{=}CHSiMeCl_2$ with K in THF

The procedure of Example 5 was repeated with 33.2 g (0.85 mol) of K metal, 201.5 g anhydrous THF, and a mixture of 10.2 g (0.09 mol) of $Me_3SiCl$, 24.4 g (0.19 mol) of $Me_2SiCl_2$, and 26.6 g (0.19 mol) of $CH_2{=}CHSiMeCl_2$. Workup as in Example 5 yielded 9.8 g (31.2%) of soluble polycarbosilane fluid, 18.0 g (58.0%) of soluble solid polycarbosilane, and 2.7 g (8.7%) of insoluble solid polycarbosilane. Pyrolysis as in Example 5 of the soluble solid yielded an SiC composition. The molar functionality F was 2.60.

Example 7: F=2.60
Reaction of 0.5/1/1 $Me_3SiCl/Me_2SiCl_2/CH_2{=}CHSiMeCl_2$ with K in THF

The reaction of Example 6 was repeated with 336.3 g (8.6 mol) of K metal, 1463.0 g anhydrous THF, and a mixture of 100.9 g (0.93 mol) of $Me_3SiCl$, 239.9 g (1.86 mol) of $Me_2SiCl_2$, and 262.3 g (1.86 mol) of $CH_2{=}CHSiMeCl_2$. Reaction maintained itself at reflux throughout time of addition (3 h), and was followed by heating at reflux for 2 h. Workup yielded 52.7 g (17.2%) of soluble polycarbosilane fluid, b.p. greater than 55°C/0,066 mbar, 186.7 g (61.0%) of soluble solid polycarbosilane, and 59.7 g (19.5%) of insoluble solid polycarbosilane. Samples of the soluble fluid, the soluble solid, and the insoluble solid were pyrolyzed to 1200°C under Ar at atmospheric pressure. Each was converted to an SiC composition, with the fluid showing a lower yield. Formation of β-SiC was confirmed in each case by X-ray diffraction.

Example 8: F=2.60
Reaction of 0.5/1/1 $Me_3SiCl/Me_2SiCl_2/CH_2{=}CHSiMeCl_2$ with Na in toluene

The reaction of Example 6 was repeated except that Na in toluene was used instead of K in THF. The reactants used were 21.0 g (0.9 mol) of Na, 175.0 g anhydrous toluene, and a mixture of 10.9 g (0.1 mol) of

$Me_3SiCl$, 25.8 g (0.2 mol) of $Me_2SiCl_2$, and 28.2 g (0.2 mol) of $CH_2=CHSiMeCl_2$. Workup yielded 6.0 g (18.2%) of soluble polycarbosilane fluid, 0.4 g (1.2%) of soluble solid polycarbosilane, and 20.7 g (62.9%) of insoluble solid polycarbosilane. This example indicates that the higher reflux temperature of toluene relative to THF and the use of Na relative to K metal results in higher crosslink density and a lower yield of soluble solid.

Example 9: F=2.64
Reaction of 0.6/0.6/1 $Me_3SiCl/Me_2SiCl_2/CH_2=CHSiMeCl_2$ with K in THF

The procedures of Example 6 were followed with 34.2 g (0.88 mol) of K metal, 167.1 g anhydrous THF, and a mixture of 15.2 g (0.14 mol) of $Me_3SiCl$, 18.1 g (0.14 mol) of $Me_2SiCl_2$, and 32.4 g (0.23 mol) of $CH_2=CHSiMeCl_2$. Workup yielded 11.0 g (31.9%) of soluble polycarbosilane fluid, 19.3 g (44.4%) of soluble solid polycarbosilane, and 3.2 g (9.3%) of insoluble solid polycarbosilane. The molar functionality F was 2.64. The soluble solid was pyrolyzed to an SiC composition.

Example 10: F=2.52
Reaction of 0.5/1.4/1 $Me_3SiCl/Me_2SiCl_2/CH_2=CHSiMeCl_2$ with K in THF

The procedures of Example 6 were repeated with 36.2 g (0.93 mol) of K metal, 200.6 g of anhydrous THF, and a mixture of 9.5 g (0.088 mol) of $Me_3SiCl$, 31.6 g (0.245 mol) of $Me_2SiCl_2$, and 24.7 g (0.175 mol) of $CH_2=CHSiMeCl_2$. Workup yielded 13.2 g (40.2%) of soluble polycarbosilane fluid and 18.0 g (56.0%) of soluble solid polycarbosilane with no insoluble solid polycarbosilane. Molar functionality F was 2.52. The soluble solid polycarbosilane was pyrolyzed to an SiC composition.

Example 11: F=2.6
Reaction of 0.5/1/1 $Me_3SiCl/ClCH_2SiMe_2Cl/CH_2=CHSiMeCl_2$ with K in THF

The procedure of Example 6 was repeated using 32.6 g (0.83 mol) of K metal, 10.8 of anhydrous THF, and a mixture of 9.6 g (0.09 mol) of $Me_3SiCl$, 25.2 g (0.18 mol) of $ClCH_2SiMe_2Cl$, and 24.8 g (0.18 mol) of $CH_2=CHSiMeCl_2$. Workup yielded 6.4 g soluble polycarbosilane fluid, b.p. greater than 50°/0,04 mbar (20.4%), and 19.7 g (62.4%) of soluble solid polycarbosilane with no insoluble solid polycarbosilane. The soluble solid yielded an SiC composition on pyrolysis under Ar at atmospheric pressure.

Example 12: F=2.67
Reaction of 1/1/1 $Me_3SiCl/CH_2=CHSiMe_2Cl/CH_2=CHSiMeCl_2$ with K in THF

The procedures of Example 6 were repeated with 33.4 g (0.86 mol) of K metal, 192.0 g anhydrous THF, and a mixture of 22.1 g (0.205 mol) of $Me_3SiCl$, 24.6 g (0.205 mol) of $CH_2=CHSiMe_2Cl$, and 28.9 g (0.205 mol) of $CH_2=CHSiMeCl_2$. Workup yielded 17.2 g (35.8%) of soluble polycarbosilane fluid, 16.2 g (34.7%) of soluble solid polycarbosilane, and 3.1 (6.6%) of insoluble solid polycarbosilane. The molar functionality F was 2.67. The soluble solid was pyrolyzed to an SiC composition under an inert atmosphere at atmospheric pressure.

Example 13: F=2.72
Reaction of 0.9/1/1 $Me_3SiCl/CH_2=CHSiMe_2Cl/CH_2=CHSiMeCl_2$ with K in THF

Example 12 was repeated with 35.2 g (0.9 mol) of K metal, 204.3 g anhydrous THF, and a mixture of 21.7 g (0.2 mol) of $Me_3SiCl$, 26.5 g (0.22 mol) of $CH_2=CHSiMe_2Cl$, and 31.0 g (0.22 mol) of $CH_2=CHSiMeCl_2$. Workup yielded 6.2 g (12.7%) of soluble polycarbosilane fluid, 30.0 g (61.6%) of soluble solid polycarbosilane, and 4.8 g (9.9%) of insoluble solid polycarbosilane. The molar functionality F was 2.72. The soluble solid polycarbosilane was pyrolyzed at atmospheric pressure under Ar to an SiC composition.

**Claims for the Contracting States BE DE FR GB IT NL SE:**

1. A branched polycarbosilane comprising more than one unit of the formula

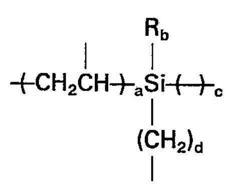

wherein R is lower alkyl having up to 8 carbon atoms, a is 0 or 1, b is 0—3, c is 0—4, d is 0—4, and a+b+c+d totals 4, with the provisos that, in different units, a, b, c, d, and R may differ, but that, in at least one unit, a+d must total 1 or more and, in at least 1 unit, a+c+d must total 3 or more.

2. A branched polycarbosilane as in claim 1 substantially composed of, in the ratio shown, units of the formulas

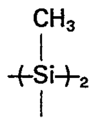 and 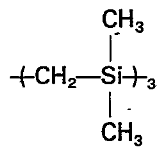

3. A branched polycarbosilane as in claim 1 substantially composed of, in the ratio shown, units of the formulas

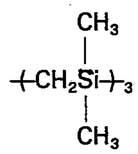 and 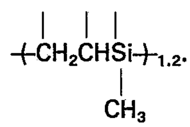

4. A branched polycarbosilane as in claim 1 substantially composed of, in the ratio shown, units of the formulas

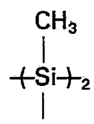 and 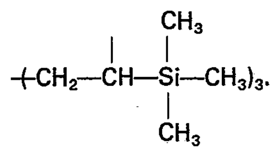

5. A branched polycarbosilane as in claim 1 substantially composed of, in the ratio shown, units of the formulas

$[(CH_3)_3Si-]_{0.8}$ and 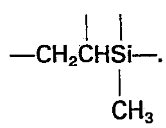

6. A branched polycarbosilane as in claim 1 substantially composed of units of the formulas

$(CH_3)_3Si-$, 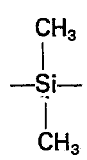 and 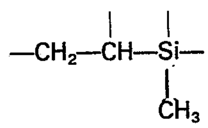

in a ratio of 0.6:1:1 or 0.5:1:1 or 0.6:0.6:1 or 0.5:1.4:1.

7. A branched polycarbosilane as in claim 1 substantially composed of, in the ratio shown, units of the formulas

$[(CH_3)_3Si-]_{0.5}$, 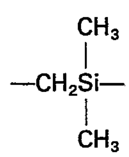 and 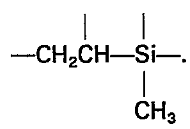

8. A branched polycarbosilane as in claim 1 substantially composed of units of the formulas

$(CH_3)_3Si-$, 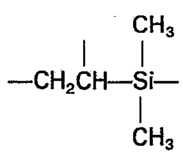 and 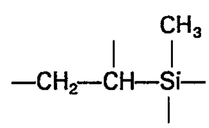

in a ratio of 1:1:1 or 0.9:1:1.

9. A process for producing branched polycarbosilanes as claimed in claims 1 to 8 which comprises reacting, with an active metal in an inert solvent at an elevated temperature, a compound system comprising one or more monomers of the formula (I)

(I) 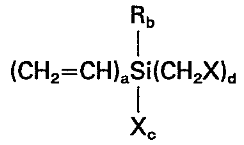

wherein R is lower alkyl having up to 8 carbon atoms, X is halo, a is 0 or 1, b is 0—3, c is 0—4, d is 0—4, a+b+c+d totals 4, and a+d totals at least 1, said compound system being selected so that its average molar functionality is at least 2.3.

10. A process as in claim 9 wherein said monomer system contains at least 2 different monomers of the formula (I), at least 1 of which is characterized by an a+c+d total of 3 or 4.

11. A process as in claim 10 wherein R is methyl and X is chloro.

12. A process as in claim 11 wherein the active metal is potassium, the solvent is tetrahydrofuran, and the elevated temperature is the ambient pressure reflux temperature of tetrahydrofuran.

13. The use of the branched polycarbosilanes of claims 1 to 8 produced according to claims 10 to 12 for producing silicon carbide by pyrolysis in an inert atmosphere.

**Claims for the Contracting State AT:**

1. A process for producing normally solid and soluble in non-protic organic solvents branched polycarbosilanes comprising

a) more than one unit of the formula

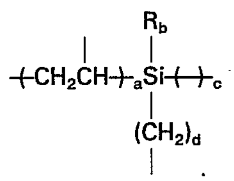

wherein R is lower alkyl having up to 8 carbon atoms, a is 0 or 1, b is 0—3, c is 0—4, d is 0—4, and a+b+c+d totals 4, with the provisos that, in different units, a, b, c, d, and R may differ, but that, in at least one unit, a+d must total 1 or more and, in at least 1 unit, a+c+d must total 3 or more; preferably

b) units of the formulas

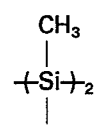 and 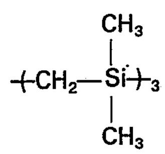 or

c) units of the formulas

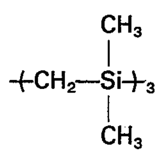 and 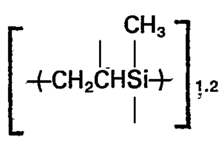 or

d) units of the formulas

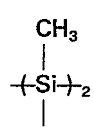 and 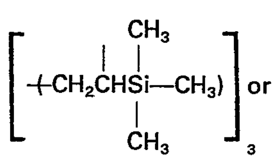 or

e) units of the formulas

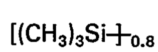 and 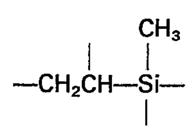

f) units of the formulas

$(CH_3)_3Si$—, 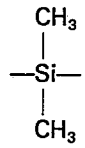 and 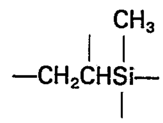

in a ratio of 0.6:1:1 or 0.5:1:1 or 0.6:0.6:1 or 0.5:1.4:1; or

g) units of the formulas

$[(CH_3)_3Si-]_{0.5}$, 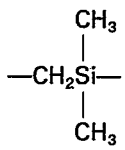 and 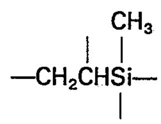 or

h) units of the formulas

$(CH_3)_3Si$—, 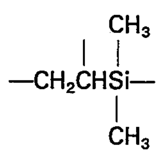 and 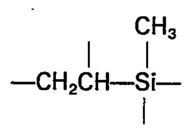

in a ratio of 1:1:1 or 0.9:1:1; which comprises reacting, with an active metal in an inert solvent, at an elevated temperature, a compound system comprising one or more monomers of the formula (I)

(I) 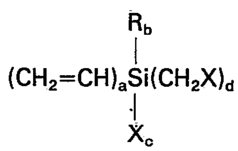

wherein R is lower alkyl having up to 8 carbon atoms, X is halo, a is 0 or 1, b is 0—3, c is 0—4, d is 0—4, a+b+c+d totals 4, and a+d totals at least 1, said compound system being selected so that its average molar functionality is at least 2.3.

2. A process as in claim 1 wherein said monomer system contains at least 2 different monomers of formula (I), at least 1 of which is characterized by an a+c+d total of 3 or 4.

3. A process as in claim 2 wherein R is methyl and X is chloro.

4. A process as in claim 1—3 wherein the active metal is potassium.

5. A process as in claim 1—4 wherein the solvent is tetrahydrofuran, and the elevated temperature is the ambient pressure reflux temperature of tetrahydrofuran.

6. The use of the branched polycarbosilanes produced according to claims 1 to 5 for the production of silicon carbide by pyrolysis in an inert atmosphere.

**Patentansprüche für die Vertragsstaaten BE DE FR GB IT NL SE:**

1. Verzweigtes Polycarbosilan enthaltend mehr als eine Einheit der Formel

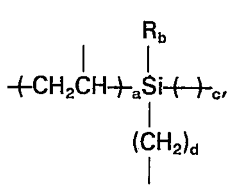

worin R eine niedere Alkylgruppe mit bis zu 8 Kohlenstoffatomen, a 0 oder 1, b 0—3, c 0—4, d 0—4 und a+b+c+d 4 beträgt mit der Maßgabe, daß in unterschiedlichen Einheiten a, b, c, d und R unterschiedlich sein können, jedoch in zumindest einer Einheit a+d 1 oder darüber ist und in zumindest einer Einheit a+c+d 3 oder mehr sein muß.

2. Verzweigtes Polycarbosilan nach Anspruch 1 im wesentlichen bestehend aus Einheiten der Formeln

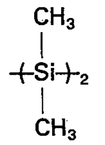 und 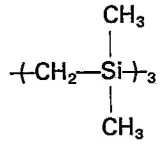

in den angegebenen Verhältnissen.

3. Verzweigtes Polycarbosilan nach Anspruch 1, bestehend im wesentlichen aus Einheiten der Formeln

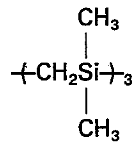 und 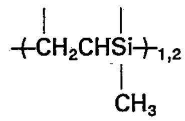

in den angegebenen Verhältnissen.

4. Verzweigtes Polycarbosilan nach Anspruch 1, im wesentlichen bestehend aus Einheiten der Formeln

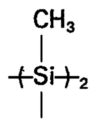 und 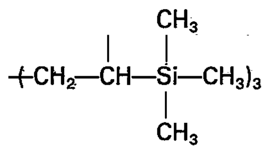

in den angegebenen Verhältnissen.

5. Verzweigtes Polycarbosilan nach Anspruch 1, im wesentlichen bestehend aus Einheiten der Formeln

$[(CH_3)_3Si-]_{0,8}$ und 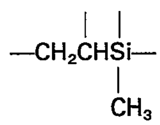

in dem angegebenen Verhältnis.

6. Verzweigtes Polycarbosilan nach Anspruch 1, im wesentlichen bestehend aus Einheiten der Formeln

$(CH_3)_3Si-$, 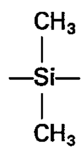 und 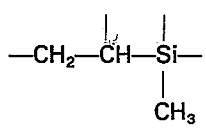

in einem Verhältnis von 0,6:1:1 oder 0,5:1:1 oder 0,6:0,6:1 oder 0,5:1,4:1.

7. Verzweigtes Polycarbosilan nach Anspruch 1, bestehend im wesentlichen aus Einheiten der Formeln

$[(CH_3)_3Si-]_{0,5}$, 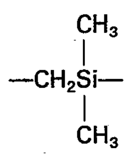 und 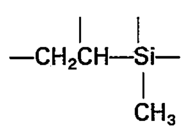

in dem angegebenen Verhältnis.

8. Verzweigtes Polycarbosilan nach Anspruch 1, im wesentlichen bestehend aus Einheiten der Formeln

$(CH_3)_3Si-$, 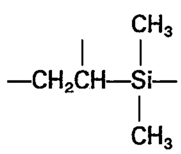 und 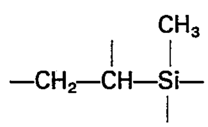

in einem Verhältnis 1:1:1 oder 0,9:1:1.

9. Verfahren zur Herstellung der Polycarbosilane nach Anspruch 1—8 durch Umsetzung eines Systems, bestehend aus einem oder mehreren Monomeren der Formel (I)

(I) 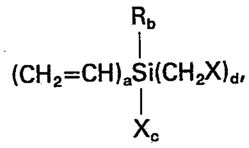

worin R eine niedere Alkylgruppe mit bis zu 8 Kohlenstoffatomen, X ein Halogenatom ist und a 0 oder 1 sein kann, b 0—3, c 0—4 und d 0—4 beträgt, a+b+c+d 4 und a+d zumindest 1 ist und dieses System derart gewählt ist, daß die mittlere molare Funktionalität zumindest 2,3 beträgt, mit einem aktiven Metall in einem inerten Lösungsmittel bei erhöhter Temperatur.

10. Verfahren nach Anspruch 9, worin das Monomersystem zumindest zwei unterschiedliche Monomere der Formel (I) enthält, von denen zumindest eines charakterisiert ist durch a+c+d 3 oder 4.

11. Verfahren nach Anspruch 10, worin R Methyl und X Chlor ist.

12. Verfahren nach Anspruch 11, worin das aktive Metall Kalium, das Lösungsmittel Tetrahydrofuran und die erhöhte Temperatur die Rückflußtemperatur des Tetrahydrofurans bei Umgebungsdruck ist.

13. Verwendung der verzweigten Polycarbosilane der Ansprüche 1—8, hergestellt nach den Ansprüchen 10—12, zur Herstellung von Siliciumcarbid durch Pyrolyse in inerter Atmosphäre.

**Patentansprüche für den Vertragsstaat AT:**

1. Verfahren zur Herstellung normalerweise fester in nicht protischen organischen Lösungsmitteln löslichen verzweigten Polycarbosilanen enthaltend

a) mehr als eine Einheit der Formel

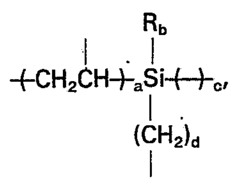

worin R eine niedere Alkylgruppe mit bis zu 8 Kohlenstoffatomen, a 0 oder 1, b 0—3, c 0—4, d 0—4 und a+b+c+d 4 beträgt mit der Maßgabe, daß in unterschiedlichen Einheiten a, b, c, d und R unterschiedlich sein können, jedoch in zumindest einer Einheit a+d 1 oder darüber ist und in zumindest einer Einheit a+c+d 3 oder mehr sein muß, vorzugsweise

b) Einheiten der Formeln

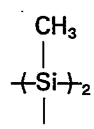 und 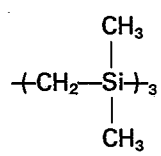

oder

c) Einheiten der Formeln

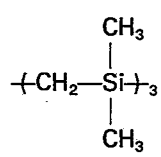 und 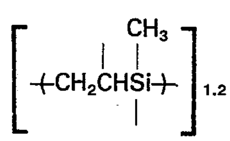

oder

d) Einheiten der Formeln

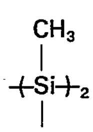 und 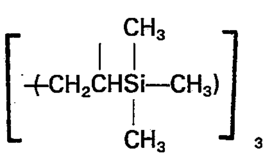

oder

e) Einheiten der Formeln

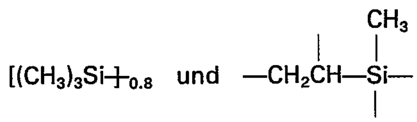

oder

f) Einheiten der Formeln

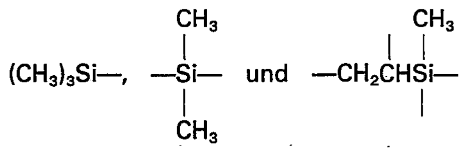

in einem Verhältnis 0,6:1:1 oder 0,5 zu:1:1 oder 0,6:1 oder 0,5:1,4:1 oder

g) Einheiten der Formeln

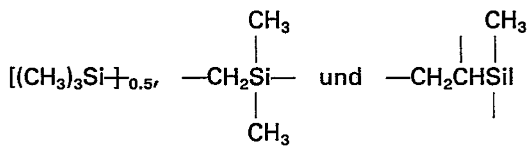

oder

h) Einheiten der Formeln

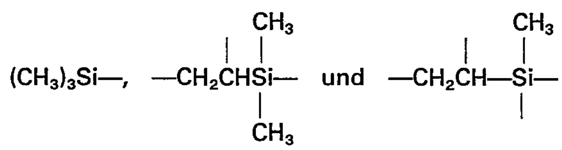

in einem Verhältnis von 1:1:1 oder 0,9:1:1, durch Umsetzen mit einem aktiven Metall in inertem Lösungsmittel bei erhöhter Temperatur eines Systems enthaltend ein oder mehrere Monomer(s) der Formel (I)

(I) 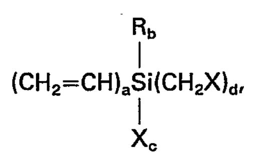

worin R eine niedere Alkylgruppe mit bis zu 8 Kohlenstoffatomen, X ein Halogenatom, a 0 oder 1, b 0—3, c 0—4, d 0—4, a+b+c+d insgesamt 4 und a+d insgesamt mindestens 2 ist und dieses System so gewählt ist, daß die mittlere molare Funktionalität zumindest 2,3 beträgt.

2. Verfahren nach Anspruch 1, worin das Monomersystem zumindest 2 unterschiedliche Monomere der Formel (I) enthält, von denen zumindest 1 charakterisiert ist durch a+c+d=3 oder 4.

3. Verfahren nach Anspruch 2, worin R eine Methylgruppe und X Chlor ist.

4. Verfahren nach Anspruch 1 bis 3, worin das aktive Metall Kalium ist.

5. Verfahren nach Anspruch 1 bis 4, worin das Lösungsmittel Tetrahydrofuran ist und die erhöhte Temperatur die Rückflußtemperatur des Tetrahydrofurans bei Umgebungsdruck ist.

6. Verwendung der nach Anspruch 1 bis 5 hergestellten verzweigten Polycarbosilane zur Herstellung von Siliciumcarbid durch Pyrolyse in inerter Atmosphäre.

**Revendications pour les Etats Contractants BE DE FR GB IT NL SE:**

1. Polycarbosilane ramifié, comprenant plus d'un motif de formule

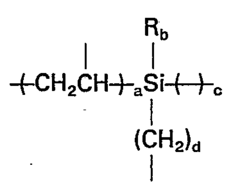

dans laquelle R est un group alkyle inférieur ayant jusqu'à 8 atomes de carbone, a la valeur 0 ou 1, b a une valeur de 0 à 3, c a une valeur de 0 à 4, d a une valeur de 0 à 4 et la somme a+b+c+d totalise 4, sous réserve que, dans des motifs différents, a, b, c, d, et R puissent être différents mais que, dans au moins un motif, la somme a+d doive totaliser 1 ou plus et que, dans au moins un motif, la somme a+c+d doive totaliser 3 ou plus.

2. Polycarbosilane ramifié suivant la revendication 1, principalement composé, dans les proportions indiquées de motifs de formules

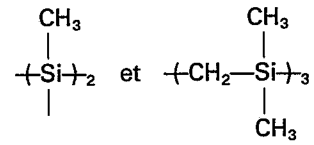

et

3. Polycarbosilane ramifié suivant la revendication 1, principalement composé, dans les proportions mentionnées, de motifs de formules

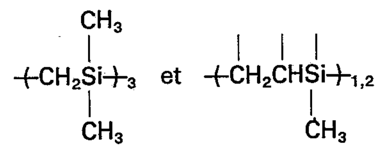

et

4. Polycarbosilane ramifié suivant la revendication 1, principalement composé, dans les proportions mentionnées, de motifs de formules

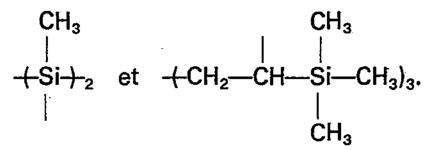

et

5. Polycarbosilane ramifié suivant la revendication 1, principalement composé, dans les proportions mentionnées, de motifs de formules

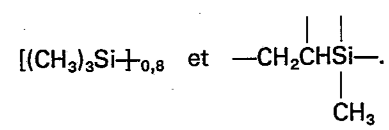

et

6. Polycarbosilane ramifié suivant la revendication 1, principalement composé de motifs de formules

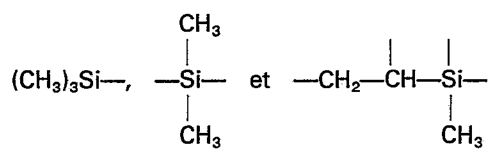

, et

dans la proportion de 0,6:1:1 ou de 0,5:1:1 ou de 0,6:0,6:1 ou de 0,5:1,4:1.

7. Polycarbosilane ramifié suivant la revendication 1, principalement composé, dans les proportions indiquées, de motifs de formules

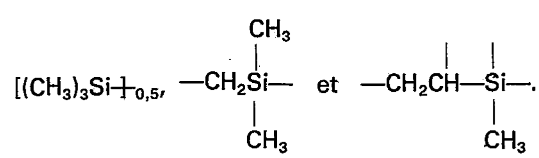

, et

8. Polycarbosilane ramifié suivant la revendication 1, principalement composé de motifs de formules

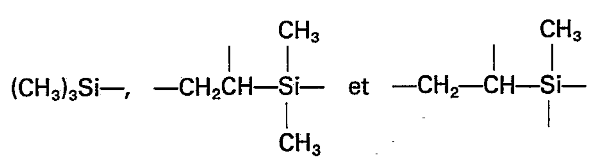

, et

dans une proportion de 1:1:1 ou de 0,9:1:1.

9. Procédé de production de polycarbosilanes ramifiés suivant les revendications 1 à 8, qui consiste à faire réagir, avec un métal actif dans un solvant inerte à une température élevée, un système de composés comprenant un ou plusieurs monomères de formule (I)

(I) 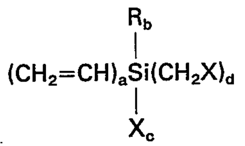

dans laquelle R est un groupe alkyle inférieur ayant jusqu'à 8 atomes de carbone, X est un radical halogéno, a a la valeur 0 ou 1, b a une valeur de 0 à 3, c a une valeur de 0 à 4, d a une valeur de 0 à 4, la somme a+b+c+d totalise 4 et la somme a+d totalise au moins 1, ledit système de composés étant choisi de manière que sa fonctionnalité molaire moyenne soit d'au moins 2,3.

10. Procédé suivant la revendication 9, dans lequel le système de monomères contient au moins deux monomères différents de formule (I), dont l'un au moins est caractérisé par une somme a+c+d égale à 3 ou 4.

11. Procédé suivant la revendication 10, dans lequel R est un groupe méthyle et X est un radical chloro.

12. Procédé suivant la revendication 11, dans lequel le métal actif est le potassium, le solvant est le tétrahydrofuranne et la température élevée est la température de reflux, à la pression ambiante, du tétrahydrofuranne.

13. Utilisation des polycarbosilanes ramifiés suivant les revendications 1 à 8, produits conformément aux revendications 10 à 12 pour l'obtention de carbure de silicium par pyrolyse dans une atmosphère inerte.

**Revendications pour l'Etat Contractant AT:**

1. Procédé de production de polycarboxilanes ramifiés normalement solides et solubles dans des solvants organiques aprotiques, comprenant

a) plus d'un motif de formule

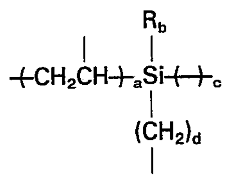

dans laquelle R est un groupe alkyle inférieur ayant jusqu'à 8 atomes de carbone, a a la valeur 0 ou 1, b a une valeur de 0 à 3, c a une valeur de 0 à 4, d a une valeur de 0 à 4 et la somme a+b+c+d est égale à 4, sous réserve que, dans des motifs différents, a, b, c, d et R puissent être différents mais que, dans au moins un motif, la somme a+d doive être égale à 1 ou plus et que dans au moins un motif, la somme a+c+d doive être égale à 3 ou plus; de préférence

b) des motifs de formules

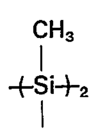 et 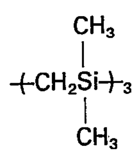

ou

c) des motifs de formules

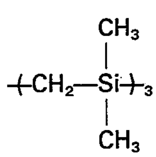 et 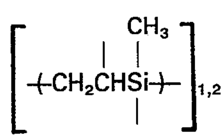

ou

d) des motifs de formules

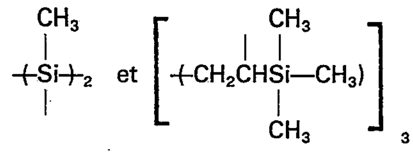

ou

e) des motifs de formules

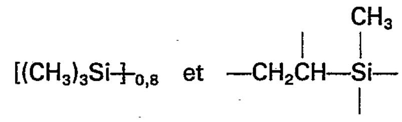

f) des motifs de formules

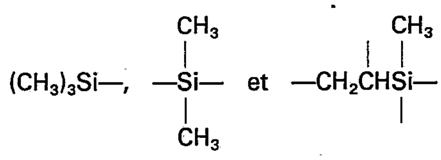

dans une proportion de 0,6:1:1 ou de 0,5:1:1 ou de 0,6:0,6:1 ou de 0,5:1,4:1; ou

g) des motifs de formules

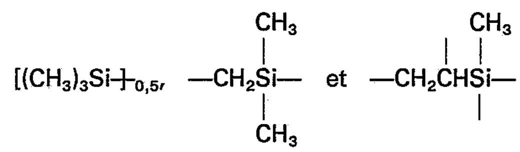

ou

h) des motifs de formules

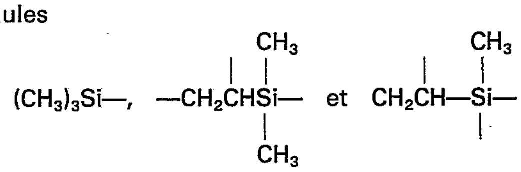

dans une proportion de 1:1:1 ou de 0,9:1:1; qui consiste à faire réagir, avec un métal actif dans un solvant inerte à une température élevée, un système de composés comprenant un ou plusieurs monomères de formule (I)

(I)

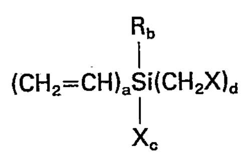

dans laquelle R est un groupe alkyle inférieur ayant jusqu'à 8 atomes de carbone, X est un radical halogéno, a a la valeur 0 ou 1, b a une valeur de 0 à 3, c a une valeur de 0 à 4, d a une valeur de 0 à 4, la somme a+b+c+d est égale à 4 et la somme a+d est égale à 1 au moins, ledit système de composés étant choisi de manière que sa fonctionnalité molaire moyenne soit au moins égale à 2,3.

2. Procédé suivant la revendication 1, dans lequel le système de monomères contient au moins deux monomères différents de formule (I), dont au moins l'un est caractérisé par une somme a+c+d égale à 3 ou 4.

3. Procédé suivant la revendication 2, dans lequel R est le groupe méthyle et X est le radical chloro.

4. Procédé suivant les revendications 1 à 3, dans lequel le métal actif est le potassium.

5. Procédé suivant les revendications 1 à 4, dans lequel le solvant est le tétrahydrofuranne et la température élevée est la température de reflux du tétrahydrofuranne à la pression ambiante.

6. Utilisation des polycarbosilanes ramifiés obtenus conformément aux revendications 1 à 5 pour la production de carbure de silicium par pyrolyse en atmosphère inerte.